# EUROPEAN PATENT APPLICATION

(11) **EP 2 400 432 A1**
(43) Date of publication of application: **28.12.2011**
(21) Application number: 11168983.2
(22) Date of filing: 07.06.2011
(51) Int. Cl.: G06K 9/00

(54) **Method and device for detecting fingerprints**

(30) Priority: 22.06.2010 IT TO20100537
(71) Applicant: Green Bit S.p.A., 10095 Grugliasco (TO) (IT)
(72) Inventor: Bachurinskiy, Andrey, 10095 Grugliasco (Torino) (IT)
(74) Representative: Bosotti, Luciano

(57) **Abstract**

A detection device comprises:
- a detection surface (12b);
- a sensor (14) for generating a sequence of images of a moving object, such as a finger (F) that is rolled on the detection surface (12); and
- processing means (14, 16) for processing the sequence of images generated by the sensor (14), the processing means being configured for identifying (100), in the object that is rolled, a leading edge in the rolling movement, with the sensor (14) configured for generating the sequence of images with a detection window that follows the aforesaid leading edge in the rolling movement.

## Description

### Technical field

The present disclosure relates to techniques for detecting moving objects.

The disclosure has been developed with a view to its possible application to the detection of fingerprint of a finger being rolled.

### Technical background

In the sector of skin-print detection, devices have been developed comprising a single detection surface (or "platen"), associated to which is a single sensor capable of operating both over a "large" area, for detecting the palm print of a hand, and over a "small" area, for detecting the fingerprint of a finger that is rolled on the detection surface. In order to be able to track in real time the movement of the finger and produce, starting from the individual images thus gathered, an overall image (referred to as "composite roll image") of the finger rolled on the detection surface, the detection of the fingerprint is usually conducted with a higher framerate.

### Object and summary

In the applicational context outlined above, there emerges the need to cause the operation of fingerprint detection not to be excessively burdensome in terms of level of performance required of the sensor and/or as regards the corresponding computational burden.

For example, it is desired to prevent having to adapt the width of the scanning window that "tracks" the finger during the rolling movement to the dimensions of the finger (possibly causing variation of said width during detection), or else having to resort to a variable framerate of the sensor, or else again having to impose an adaptation of the rolling speed during detection, for example by imposing a slower movement in the case of fingers of larger dimensions, all these factors being, on the one hand, such as to render the operation of detection of the fingerprints more complicated and burdensome and, on the other hand, such as to lead to a final result that is not satisfactory, for example as regards the composite image of the finger being rolled.

The object of various embodiments is to meet the need outlined above.

In various embodiments, said object is achieved thanks to a method having the characteristics recalled specifically in the ensuing claims.

Various embodiments also regard a corresponding device.

The claims form an integral part of the technical teaching provided herein in relation to the invention.

### Brief description of the figures

The invention will now be described, purely by way of non-limiting example, with reference to the annexed figures, wherein:
- Figure 1 is a block diagram of one embodiment;
- Figure 2, comprising portions designated progressively from a) to f) represents various successive steps of the operation of detection of a fingerprint according to embodiments; and
- Figure 3 is a flowchart representing operation of embodiments.

### Detailed description

Illustrated in the ensuing description are various specific details aimed at an in-depth understanding of the embodiments. The embodiments may be provided without one or more of the specific details, or with other methods, components, materials, etc. In other cases, known structures, materials, or operations are not shown or described in detail to prevent the various aspects of the embodiments from being obscured.

Reference to "an embodiment" or "one embodiment" in the framework of the present description is meant to indicate that a particular configuration, structure, or characteristic described in relation to the embodiment is comprised in at least one embodiment. Hence, phrases such as "in an embodiment" or "in one embodiment" that may be present in various points of this description do not necessarily refer to one and the same embodiment. In addition, particular conformations, structures, or characteristics can be combined in any adequate way in one or more embodiments.

The references used herein are only provided for convenience and hence do not define the sphere of protection or the scope of the embodiments.

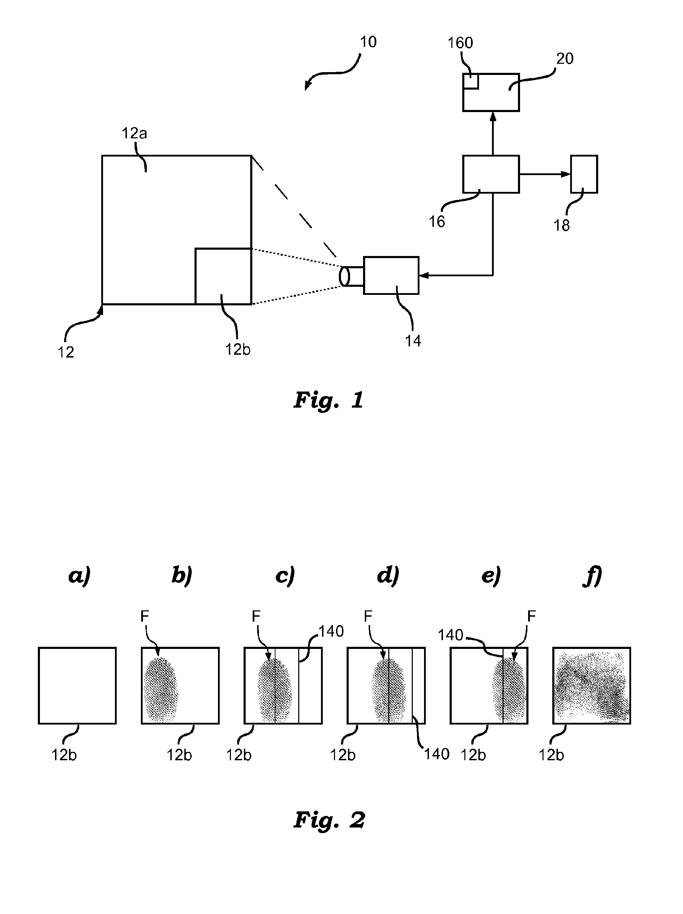

As regards the overall architecture of the device 10 used for detecting skin prints (palm print and fingerprint of a finger being rolled), various embodiments may be reduced to the solution represented in Figure 1.

In said figure, the reference number 12 designates as a whole a detection surface (or platen), constituted, for example, by a plane or curved (half)transparent screen, in which there may be distinguished a relatively speaking large area 12a, which can be used for detecting the palm print of a hand, and a relatively speaking small area 12b - located, for example, in a corner of the large area -, which can be used for detecting the fingerprint of a finger that is rolled on the detection surface.

The representation of Figure 1 regards a platen 12 and areas 12a and 12b of a square shape: this choice is not, on the other hand, imperative.

The reference number 14 designates an optical sensor (which can, in practice, be likened to a high-definition photographic/video camera) capable of performing its detection function:
- on the large area 12a, for detecting the palm print of a hand resting on the platen 12;: and
- on the small area 12b, for detecting the fingerprint of a finger (for example, the index finger) rolled over the area 12b itself.

In various embodiments, the operation of fingerprint detection leads to generation, from the individual images gathered during the rolling movement, of an overall image of the finger referred to as "composite roll image".

The output signal of the sensor 14 is sent to a processing unit 16 (such as a microprocessor), which receives said signal, possibly already pre-treated in the sensor 14 itself, and processes the images of the skin prints (palm print, fingerprint) with a view, for example, of storage thereof in a database 18 and/or of its possible presentation on a display 20. It will be appreciated, on the other hand, that the operations of processing of the signal of the sensor 14 can be either concentrated in the unit 16 or shared between the sensor 14 (at a pre-processing level) and the unit 16.

In basic terms, and except for what will be described more fully hereinafter, the general structure and the general criteria of operation of the apparatus 10 correspond to known structures and criteria, which renders any more detailed description herein superfluous.

Various embodiments envisage use, for detecting the fingerprint of the finger made to roll over the small area 12b, of a detection window 140, which follows the rolling movement of the finger with reference to the region of interest for acquisition of new information on the fingerprint.

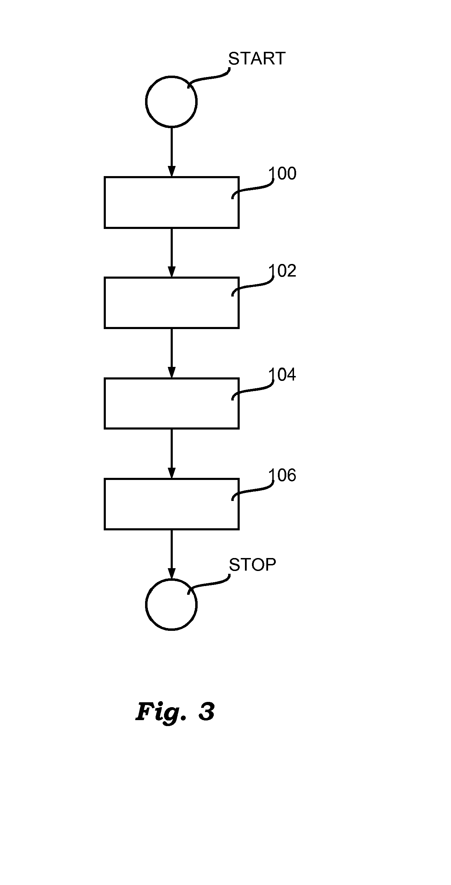

For this purpose, in various embodiments, the sensor 14 and the processing unit operate according to the criteria schematically recalled in the flowchart of Figure 3.

After a starting step (START) - aimed, in various embodiments, at following detection of the palm print of a hand (conducted according to known criteria, which are not of specific interest for the description of the embodiments) - the system described herein initially sets itself in a pre-reading step 100, in which the small scanning area 12b is initially inspected, i.e., scanned, by the sensor 14 over all its surface (see Figure 2a) so as to identify the effective position of the finger F.

For the purposes of the present description, which is provided purely by way of example, it will be assumed that the finger is initially positioned on one side of the small area 12b, for example on the left-hand side (the choice of this side is not, on the other hand, imperative).

Following upon this pre-reading step 100, the system (basically the unit 16) is able to acquire basic information both on the position of the finger F and on the expected direction of the rolling movement: to the right or to the left, according to whether the finger F was initially set on the left-hand side or else on the right-hand side of the area 12b.

On the basis of this information, the system can evolve to a step of roll detection 102. During this step, for example following upon a visual warning (which may be accompanied by an acoustic warning) on a region 160 of the display unit 20, the person whose fingerprint is being taken starts to roll his or her finger F (from left to right, with reference to the example illustrated herein) over the small window 12b of the platen 12.

In various embodiments, during said step, the active detection region (active pixel region) of the sensor 14 can be reduced so as to correspond simply to a "sub-window" 140 - note in particular the portions c), d) and e) of Figure 2 corresponding to a rectangular strip set in a region corresponding to, in practice bestraddling, the edge "upstream", "leading" edge, of the image of fingerprint of the finger F rolled over the area 12b. By "upstream" or "leading" edge of the image is meant the edge of the fingerprint that is "ahead" in the movement of rolling.

In the case assumed herein (finger initially positioned on the left-hand side of the small area 12b and rolling movement directed to the right) the aforesaid upstream or leading edge is the right-hand edge of the image.

In the complementary case (finger initially positioned on the right-hand side of the small area 12b and rolling movement directed to the left), the aforesaid upstream or leading edge would be the left-hand edge of the image.

Whatever the direction of the rolling movement, the scanning window 140 is maintained during the movement, so to speak, "straddling" the leading edge of the image. The sensor 14 is hence able to gather, at each frame of the its scanning action, the "new" information on the fingerprint corresponding to the portion of the surface of the finger that, as a result of the rolling movement, has just been brought into contact with the surface of the area 12b.

The width of the window 140 - detected in the direction of the rolling movement (horizontal in the figures) - can be chosen with fixed dimensions - hence without undergoing any variations during the movement of rolling of the finger - with low values of, for example, 10-15 mm, preferably approximately 13 mm.

The height of the window 140 - detected in direction orthogonal to the direction of the rolling movement (hence in the vertical direction in the figures) - can be equal to the height of the area 12b, for example in the region of 40 mm, this in view of the fact that the print of the thumb of a man that rests on the surface of the platen 12 can present a width even in the region of 25 mm.

As has already been said, in various embodiments, the fact that the detection window 140 is kept localized around the leading edge of the image of the fingerprint F exploits the fact that during a rolling movement what counts, for the purposes of the action of detection, is the "new" information linked to that part of the fingerprint that progressively comes into contact with the surface of the area 12b as a result of the rolling movement, whereas the information corresponding to the parts of the finger already brought into contact with the surface of the small area 12b has already been acquired in the preceding frames and hence does not need to be detected again.

In the course of step 102 the sensor 14 is hence able to detect, with high precision and without any excessive computational burden (it being possible to operate with constant framerate and without imposing particular performance requirements on the sensor 14 and on the unit 16), the successive images of the finger being rolled. This operation is accompanied by an action of tracking of the finger being rolled that is concentrated in the region of interest around the leading edge of the image of the fingerprint, with the consequent possibility - given that the detection area is of reduced dimensions - of operating with a higher framerate.

The images thus gathered are then processed in a step 104 in order to produce a composite image schematically represented in part f) of Figure 2.

Step 106 of the diagram of Figure 3 indicates schematically other possible operations of processing of said image (storage, display, etc.) conducted according to criteria in themselves known, before a final step of arrest (STOP) is reached.

By operating with a scanning window 140 of fixed width it is possible to operate with a constant frame rate, generated for example by the sensor 14 in terms of frames per second in a way altogether independent of the dimensions of the finger. This characteristic enables detection of fingerprints of fingers having altogether different dimensions (usually a thumb has a print that is approximately twice that of a little finger) without requiring any adaptation either of the detection framerate or of the rate of rotation of the finger on the part of the person whose fingerprint is being taken.

Of course, without prejudice to the principle of the invention, the details of construction and the embodiments may vary, even significantly, with respect to what has been illustrated herein purely by way of non-limiting example, without thereby departing from the scope of the invention as defined by the annexed claims.

## Claims

1. A method of generating a sequence of images of a moving object, such as a finger (F) being rolled on a detection surface (12b), the method including:
- identifying (100), in the object (F) being rolled, a leading edge in the rolling movement, and
- generating said sequence of images with a detection window (140) which follows said leading edge during said rolling movement.

2. The method of claim 1, including keeping constant the width of said detection window (140) in the direction of said rolling movement.

3. The method of claim 1 or claim 2, wherein the width of said detection window (140) in the direction of said rolling movement is between 10 and 15 millimeters, preferably about 13 mm.

4. The method of any of the preceding claims, including keeping constant the frame rate of said sequence of images during said rolling movement.

5. The method of any of the preceding claims, including an initial step (100) of detecting the image of said object to identify the initial position of said object (F) kept stationary on said detection surface (12b), by identifying the expected direction of said rolling movement based on the initial position of said object (F) on said detection surface (12b).

6. A detection device, including:
- a detection surface (12b),
- a sensor (14) to generate a sequence of images of a moving object, such as a finger (F) being rolled on said detection surface (12b), and
- processing means (14, 16) to process said sequence of images as generated by said sensor (14), said processing means configured to identify (100), in the object (F) being rolled, a leading edge in the rolling movement, said sensor (14) configured to generate said sequence of images with a detection window (140) which follows said leading edge during said rolling movement

7. The device of claim 6, including said sensor (14) configured to keep constant the width of said detection window (140) in the direction of said rolling movement

8. The device of claim 6 or claim 7, wherein the width of said detection window (140) in the direction of said rolling movement is between 10 and 15 millimeters, preferably about 13 mm.

9. The device of any of claims 6 to 8, including said sensor (14) configured to keep constant the frame rate of said sequence of images during said rolling movement

10. The device of any of claims 6 a 9, including said processing means (14, 16) configured to identify, in an initial step (100) of detecting the image of said object, the initial position of said object (F) kept stationary on said detection surface (12b), and to identify the expected direction of said rolling movement based on the initial position of said object (F) on said detection surface (12b).
